# EUROPEAN PATENT SPECIFICATION

(11) **EP 4 518 196 B1**
(45) Date of publication and mention of the grant of the patent: **06.05.2026**
(21) Application number: 23795006.8
(22) Date of filing: 11.04.2023
(51) Int. Cl.: H04B 10/548, H04B 10/70, G02B 6/00, H04L 7/00, H04L 9/08

(54) **MINIATURIZED TIME PHASE DECODER AND QKD RECEIVER**
MINIATURISIERTER ZEITPHASENDECODIERER UND QKD-EMPFÄNGER
DÉCODEUR DE PHASE TEMPORELLE MINIATURISÉ ET RÉCEPTEUR QKD

(30) Priority: 24.04.2022 CN 202210443737
(43) Date of publication of application: 05.03.2025
(73) Proprietor: Quantumctek Co., Ltd., Hefei, Anhui 230088 (CN)
(72) Inventor: TAO, Jun, Hefei, Anhui 230088 (CN); LIU, Rende, Hefei, Anhui 230088 (CN); TANG, Yanlin, Hefei, Anhui 230088 (CN); TANG, Shibiao, Hefei, Anhui 230088 (CN); YING, Yong, Hefei, Anhui 230088 (CN)
(74) Representative: Detken, Andreas
(86) International application number: PCT/CN2023/087485
(87) International publication number: WO 2023/207573

(56) References cited:
- EP-A1- 3 823 208
- CN-A- 106 161 011
- CN-U- 206 790 495
- CN-U- 208 369 599
- CN-U- 209 330 134
- CN-U- 217 590 831
- US-A1- 2010 196 005
- US-A1- 2012 163 751

## Description

This application claims priority to Chinese Patent Application No. 202210443737.5, titled "MINIATURIZED TIME PHASE DECODER AND QKD RECEIVER", filed on April 24, 2022 with the China National Intellectual Property Administration.

### FIELD

The present disclosure relates to the field of quantum information technology, and in particular to a miniaturized time-phase decoder and a QKD receiver that are implemented based on a planar lightwave circuit chip.

### BACKGROUND

Quantum secure communication is a secure communication method different from classical communication, is capable to identically generate unconditionally secure keys between both sides of the communication, support encryption of classical information in a "one-time pad" manner, and ensure a high security of information transmission. Therefore, the quantum secure communication obtains wide attention. A quantum secure communication system in the prior art is implemented mainly based on quantum key distribution (QKD) technology. A QKD system includes a sender and a receiver. The sender realizes encoding and transmission of a quantum state using an encoder, and the receiver realizes decoding and detection of the quantum state using a decoder. The decoder is one of core devices of the receiver, determining system indicators such as the key rate and the error rate of the QKD system. In the QKD system based on a phase scheme or a time-phase scheme, interference demodulation is performed on a pulse photon pair with phase encoded information sent by the sender, so as to implement single photon detection.

In the time phase encoding and decoding scheme based on the BB84 protocol, there are a phase basis and a time basis. A photon pair, formed by two pulses one after the other with a certain phase difference, can be generated by encoding for the phase basis, to form phase-encoded light pulses. Pulse photons distributed one after another in the time domain can be generated by encoding for the time basis, to form time-encoded light pulses. In a case of decoding, basis selection is performed using a basis selection unit, and then quantum states under different bases are respectively detected by different detectors. The phase-encoded light pulses are mainly interference demodulated by an unbalanced interferometer before the phase state detection. The on-chip time-phase decoder in the prior art, mainly applies the chip fabricated by silicon-based technique and the like to implement time-phase quantum state decoding.

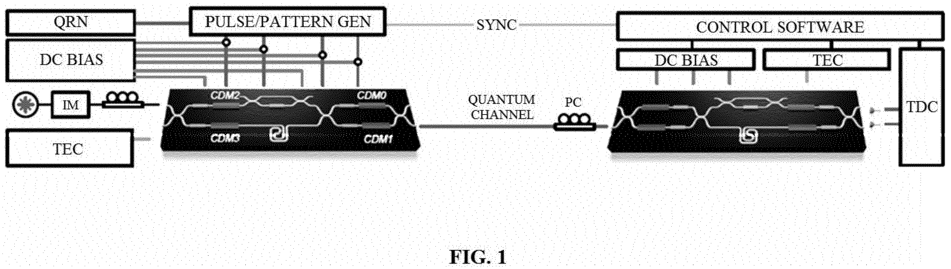

Figure 1 shows a prior art high-speed silicon-based on-chip QKD encoding and decoding system, which uses a chip for decoding in the time phase decoder, where the chip is reciprocal with the one of the sender. To be specific, a balanced interferometer and an unbalanced interferometer are included. The balanced interferometer is configured to measure states |0> and |1>, the unbalanced interferometer is configured to measure states [+> and |->. The interfered light pulses are ultimately detected by the off-chip single-photon detectors.

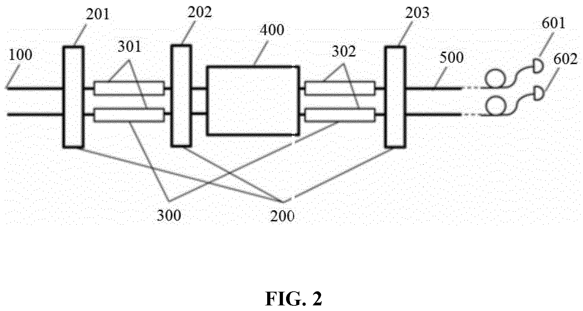

Patent No. CN111934868A discloses a decoding chip and decoding method for quantum key distribution, which is mainly used in a QKD system based on a time phase encoding protocol. As shown in Figure 2, the decoding chip includes an input waveguide, a directional coupler, a phase modulator, a delay line, an output waveguide and the like. The decoding chip can implement an adjustable splitting ratio, balance the power of the double time-bin pulse light, so as to optimize an interference visibility and reduce a bit error rate. The interference visibility of the decoding chip is not sensitive to temperature variation, that is, the bit error rate caused by the optical device is not sensitive to temperature variation.

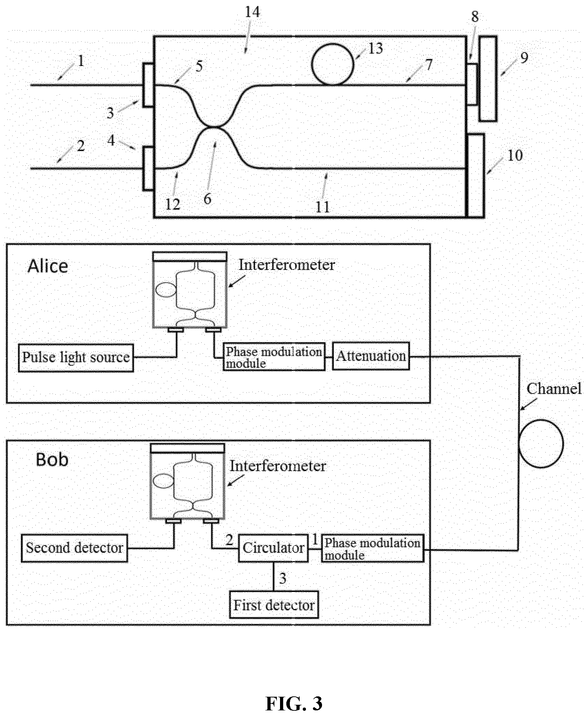

Patent No. CN109343173A discloses a hybrid waveguide integrated interferometer, which is configured to implement the encoding and decoding function of the QKD system based on the phase encoding protocol. As shown in Figure 3, the interferometer includes a fiber, a waveguide coupler, an optical waveguide chip (including a delay line), a phase waveguide modulator, a reflection module and the like. In the interferometer, a difference between lengths of arms is readily controllable, thereby facilitating reducing the production cost of the unbalanced interferometer. The interferometer formed by using the optical waveguide chip is relatively stable and insensitive to external temperature variation and vibration. The interferometer has reduced size and convenient packaging.

The decoders shown in Figure 1 and Figure 2 are each integrated with a phase modulator, and mainly use chips made from silicon, silicon nitrogen oxide or like materials. The waveguide chip mainly operates in a TE mode or a TM mode, and the polarization state is random before being coupled into the chip through the optical fiber transmission link, resulting in direct loss of photons in a non-operating mode after entering the waveguide chip, and causing problems such as degradation of performance of the system and large fluctuation of key rate of the system. In order to solve the above problems, an external polarization controller is usually arranged, therefore, the size of the receiver and the complexity of the system are significantly increased. In addition, a large difference between a diameter of the silicon-based chip and a diameter of a fiber mode field, a high process requirement and a large loss of an optical coupling between the fiber and the chip can also cause decrease of the key rate of the system. Therefore, such schemes have a low performance and a high process requirement in general. The interferometer in Figure 3, although being integrated on chip, needs an external optical circulator and an external phase modulation module, causing the size of the whole QKD receiver to be large. In summary, it can be concluded that the decoder for the QKD system in the prior art suffers from the tradeoff in terms of size and performance.

CN 209330134U proposes a time-bit-phase decoding device for a DC-modulated quantum key distribution system based on polarization-orthogonal rotation reflection. This device is used to perform time-bit-phase decoding on input optical pulses of arbitrary polarization states, comprising: a front beam splitter, which receives the input optical pulse through an input port and outputs two optical pulses obtained by splitting the input optical pulse through two output ports; a DC phase decoder optically coupled to one of the two output ports, including a first beam splitter, two reflection devices, two sub-optical paths optically coupled to the first beam splitter and respectively coupled to the two reflection devices, and a DC phase modulator located on one of the two sub-optical paths, wherein the two reflection devices are polarization-orthogonal rotation reflection devices. EP 3823208A1 discloses a time phase coding device used for quantum key distribution, which comprises a signal light source 1, an intensity modulator 2, an optical transmission unit 3 and a beam-combining unit 4, wherein the intensity modulator 2 comprises a Sagnac interferometer 21 and a first phase modulator 22, a phase modulation value of one among 0, π/2, π, and 3π/2 being applied by means of the first phase modulator 22 within a first time period, thereby providing a time phase coding process which has no relation to environment and which is easy to control.

### SUMMARY

In view of the above problems in the prior art, a miniaturized time phase decoder implemented based on a planar lightwave circuit chip and a QKD receiver are provided in the present disclosure, in which all on-chip devices are fabricated based on the planar lightwave circuit (PLC) technique, and a length difference between arms of the interferometer can be accurately controlled by means of the conventional process. Devices such as phase shifters or phase modulators are not required in the interference loop to maintain the interference stability. Except the external single-photon detectors, other functional devices are passive devices with relatively high stability and reliability. Furthermore, since the planar lightwave circuit (PLC) mode is substantially consistent with a mode in the fiber, it is not required to specifically control the polarization state before being coupled into the chip, so as to eliminate the requirement for external devices such as a polarization controller, and further reduce the size of the QKD receiver.

The invention is set out in the appended set of claims.

### BRIEF DESCRIPTION OF THE DRAWINGS

The embodiments of the present disclosure will be described in detail below in conjunction with the drawings.

In order to clearly illustrate the technical solutions in the embodiments of the present disclosure or the prior art, the drawings required in the description of the embodiments or the prior art will be briefly introduced hereinafter. Apparently, the drawings in the following description merely show some embodiments of the present disclosure, those skilled in the art can obtain other drawings based on these drawings without creative efforts.
Figure 1 shows a high-speed silicon-based on-chip QKD encoding and decoding system in the prior art;
Figure 2 shows a decoding chip for quantum key distribution in the prior art;
Figure 3 shows a hybrid waveguide integrated interferometer configured to implement the encoding and decoding function of the QKD system based on phase encoding protocol in the prior art;
Figure 4 shows an example of a time phase decoder according to an embodiment of the present disclosure;
Figure 5 shows a QKD receiver implemented based on the time phase decoder shown in Figure 4; and
Figure 6 shows another example of a time phase decoder and a QKD receiver implemented based on the example according to an embodiment of the present disclosure.

### DETAILED DESCRIPTION

Hereinafter, exemplary embodiments of the present disclosure will be described in detail with reference to the drawings. The following embodiments are provided in a manner of illustration, to fully convey the spirit of the present disclosure to those skilled in the art to which the present disclosure pertains. Therefore, the present disclosure is not limited to the embodiments disclosed herein.

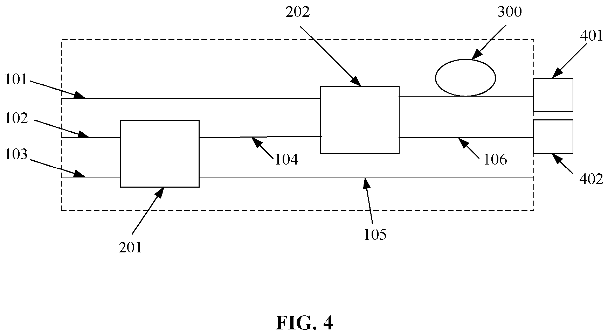

Figure 4 shows an example of a time phase decoder according to the present disclosure. The time phase decoder includes a decoding chip, a first reflection unit 402 and a second reflection unit 401, where the first reflection unit 402 and the second reflection unit 401 are arranged at an edge of the decoding chip.

In the present disclosure, the decoding chip is implemented based on the planar lightwave circuit (PLC) technology. For example, the decoding chip can be fabricated by SiO₂ planar lightwave circuit technique.

As shown in Figure 4, the decoding chip includes a first beam splitter 201 and a second beam splitter 202. The beam splitter 201/202 can be fabricated from the silicon dioxide material with the planar lightwave circuit technology.

In the decoding chip, the first beam splitter 201 is a four-port device provided with a first port, a second port, a third port and a fourth port. The first beam splitter 201 is configured to split, in a case that a light signal input from the first port, the light signal to be output from the second port and the third port; and split, in a case that a light signal input from the third port, the light signal to be output from the first port and the fourth port.

Similarly, the second beam splitter 202 is a four-port device provided with a fifth port, a sixth port, a seventh port and an eighth port. The second beam splitter 202 is configured to split, in a case that a light signal input from the fifth port, the light signal to be output from the sixth port and the seventh port; and split, in a case that a light signal input from the seventh port, the light signal to be output from the fifth port and the eighth port.

Still referring to Figure 4, the decoding chip is further provided with multiple externally-available input and output ports including: an input port, a time basis signal output port, a first phase basis signal output port, a second phase basis signal output port, a first reflection port and a second reflection port.

In the decoding chip, the input port is configured to receive the time phase encoded light signal. The time phase encoded light signal includes, under the phase basis, a photon pair formed by two pulses one after another with a certain phase difference; and includes, under the time basis, pulse photons distributed one after another in the time domain.

Inside the chip, the input port is connected to the first port of the first beam splitter 201 through the first waveguide 103, so as to select a basis for the input time phase encoded light signal by means of the first beam splitter 201.

The first beam splitter 201 serves as a basis selection unit, where the time phase encoded light signal, when being output from the second port, is selected to be decoded under the time basis; and the time phase encoded light signal, when being output from the third port, is selected to be decoded under the phase basis.

Therefore, inside the chip, the second port of the first beam splitter 201 is connected to the time basis signal output port through the second waveguide 105, to allow the light signal output from the time basis signal output port be detected and decoded under the time basis. Meanwhile, the third port of the first beam splitter 201 is connected to the fifth port of the second beam splitter 202 through the third waveguide 104, to allow the time phase encoded light signal be decoded under the phase basis by means of the phase decoding optical path including the second beam splitter 202.

In the present disclosure, the first beam splitter 201 is configured to split the light signal in an unequal manner, that is: in a case that the light signal is input from the first port, the ratio of the two light signal components output from the second port and the third port after beam splitting is A2:A3, where A2 is different from A3.

In a preferable embodiment, the splitting ratio A2:A3 is set to be 70:30.

In the present disclosure, the phase decoding of the time phase encoded light signal is implemented by arranging an unbalanced interferometer including the second beam splitter 202 in the decoding chip, where the second beam splitter 202 is configured to split the light signal in an equal manner.

Reference is made to Figure 4, inside the decoding chip, the sixth port of the second beam splitter 202 is connected to the first reflection port through the fourth waveguide 106, and the seventh port is connected to the second reflection port through the fifth waveguide 300. The fourth waveguide 106 and the fifth waveguide 300 have different lengths (optical path lengths). Therefore, the first reflection unit 402 and the second reflection unit 401 are respectively arranged at the first and second reflection ports to reflect the light signal arriving at the reflection ports, and deflect the polarization state of the light signal by 90 degrees. In this manner, a structure of an unbalanced interferometer is implemented.

In a preferable embodiment, the first (second) reflection unit can be a 45-degree Faraday rotator mirror.

The unbalanced interferometer is provided with the fourth waveguide and the fifth waveguide that have different optical path lengths, where the fourth waveguide and the fifth waveguide serve as two unequal arms to provide a relative delay for the two light signals one after another under the phase basis. Therefore, the length difference (difference in optical path length) between the fourth and fifth waveguides can be set as 1/2 of the time interval between the two light pulses one after another under the phase basis, allowing the two light pulses to interfere in the unbalanced interferometer.

For example, the fifth waveguide 300 can be set in a form of a waveguide delay line to serve as a long arm in the unbalanced interferometer, or vice versa.

Therefore, in a case that the time phase encoded light signal subjects to a passive basis selection of the first beam splitter 201 and enters the third waveguide 104 from the third port to be decoded under the phase basis, the time-phase encoded light signal enters the unbalanced interferometer through the fifth port. Inside the unbalanced interferometer, the light signals transmitted along the fourth and fifth waveguides are respectively reflected by the first Faraday rotator mirror 402 at the first reflection port and second Faraday rotator mirror 401 at the second reflection port, and return to the second beam splitter 202 along the original paths. In addition, the polarization states of the light signals transmitted along the fourth and fifth waveguides are deflected by 90 degrees to obtain a self-compensation of polarization state change. The two reflected light signals interfere at the second beam splitter 202 and generate an interference signal, and the interference signal is output from the fifth or eighth port of the second beam splitter 202. Those skilled in the art know that for the time phase encoded light signal, during the process of decoding under the phase basis, the unbalanced interferometer outputs three interference signals (interference peaks) in terms of time scale, and the interference signal in the middle corresponds to phase-encoded information of the time phase encoded light signal. On the basis that the phase difference between the two pulses one after another in the photon pair under the phase basis is 0 or π, the interference signal is output from the fifth or eighth port of the second beam splitter 202.

Still referring to Figure 4, the eighth port of the second beam splitter 202 is connected to the first phase basis signal output port through the sixth waveguide 101, allowing performing photon counting detection of the interference signal output from the eighth port. The fifth port of the second beam splitter 202 is connected to the third port of the first beam splitter 201 through the third waveguide 104, and the fourth port of the first beam splitter 201 is connected to the second phase basis signal output port through the seventh waveguide 102, allowing performing the photon counting detection of the interference signal output from the fifth port. In this way, the phase state decoding is implemented.

In the present disclosure, the waveguide and the beam splitter can be preferably fabricated from silicon dioxide materials with the planar lightwave circuit technology.

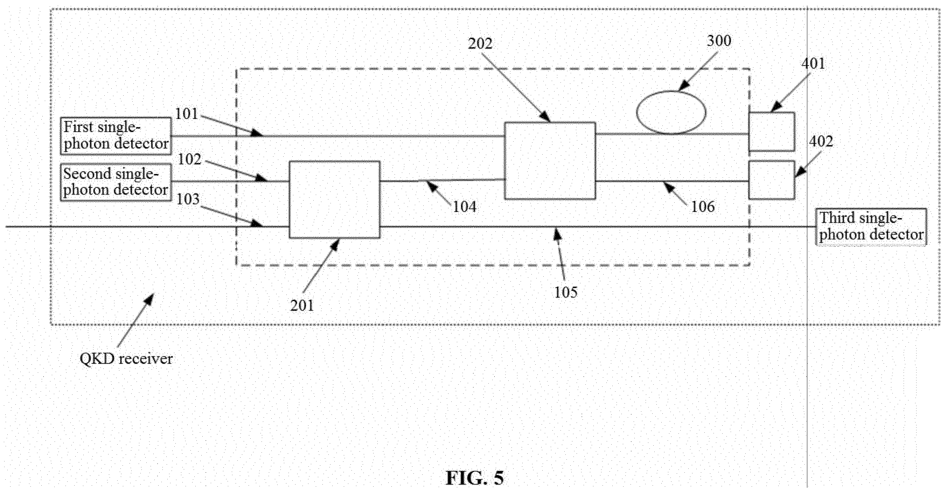

Figure 5 shows an example of a QKD receiver according to the present disclosure. The QKD receiver includes the decoding chip shown in Figure 4, a first photoelectric detection unit for time basis decoding and a second photoelectric detection unit for phase basis decoding.

In the example shown in Figure 5, the first photoelectric detection unit can include a third single-photon detector arranged at the time basis signal output port, where the first photoelectric detection unit is configured to perform photon counting detection of the output light signal.

The second photoelectric detection unit can include a first single-photon detector and a second single-photon detector respectively arranged at the first phase basis signal output port and second phase basis signal output port, where the first and second single-photon detectors are configured to perform photon counting detection of the output interference signals.

Since the interference signals output from the fifth and eighth ports of the second beam splitter 202 travel from the second beam splitter 202 to the first and second phase basis signal output ports via different optical paths, the interference signals will have different light intensities when arriving at their respective detectors, resulting in unbalanced intensities of the detection signals.

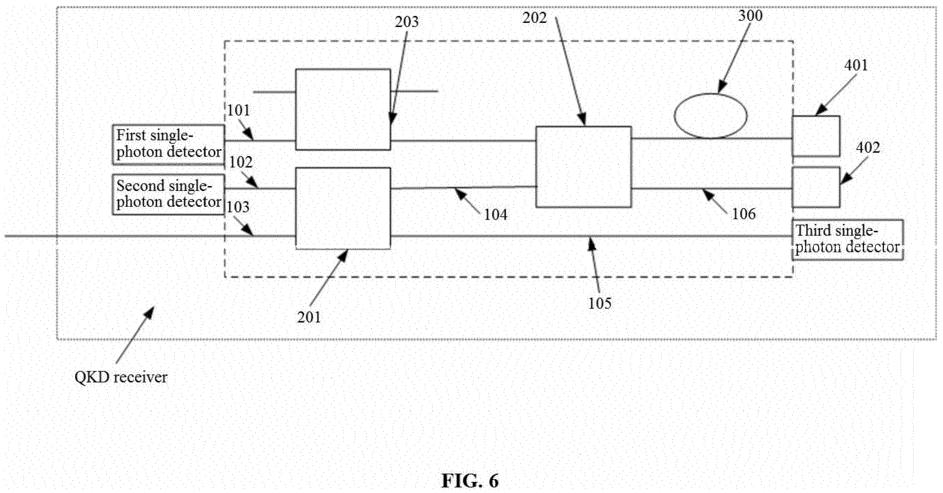

In view of this, in an embodiment according to the present disclosure, the decoding chip and QKD receiver is further provided with a third beam splitter 203 as shown in Figure 6.

As shown in Figure 6, the third beam splitter 203 is a four-port device provided with a ninth port, a tenth port, a eleventh port and a twelfth port. The third beam splitter 203 is configured to split, in a case that a light signal input from the ninth port, the light signal to be output from the tenth port and the eleventh port; and split, in a case that a light signal input from the eleventh port, the light signal to be output from the ninth port and the twelfth port.

The third beam splitter 203 is arranged at an optical path between the second beam splitter 202 and the first phase basis signal output port. In this case, the sixth waveguide can be formed by a first waveguide section and a second waveguide section. The eleventh port is connected to the eighth port through the first waveguide section, and the twelfth port is connected to the first phase basis signal output port through the second waveguide section. In this way, intensity compensation is provided for the interference signal arriving at the first phase basis signal output port.

In order to cause the interference signals arriving at the first and second phase basis signal output ports to have a same light intensity, the third beam splitter 203 is capable of splitting the light signal in an unequal manner, that is: in a case that the light signal is input from the ninth port, the ratio of the two light signal components respectively output from the tenth port and the eleventh port after beam splitting is A2:A3, where A2 is different from A3.

In a preferable embodiment, the beam splitting ratio A2:A3 is set to be 70:30. Therefore, in a case that the interference signal output from the fifth port of the second beam splitter 202 reaches the second phase basis signal output port via the fourth port of the first beam splitter 201 (which has a splitting ratio of 70%), the interference signal output from the eighth port of the second beam splitter 202 also reaches the first phase basis signal output port via the twelfth port of the third beam splitter 203 (which has a splitting ratio of 70%). In this case, the detection output results of the photon counting detection of the phase state interference signals by the first and second single-photon detectors are substantially balanced.

In views of the above, in the decoding chip and QKD receiver according to the present disclosure, all on-chip devices (the basis selection unit and the time phase decoding unit) are fabricated based on PLC technique, and the length difference between arms of the interferometer can be accurately controlled by the conventional process. Devices such as a phase shifter or a phase modulator are not required in the interference loop to maintain the stability of interference. Except the external single-photon detectors, other functional devices are passive devices with a relatively high stability and reliability. Furthermore, since the planar lightwave circuit (PLC) mode and the mode in the fiber is substantially consistent, it is not required to specifically control the polarization state before being coupled into the chip, eliminating the requirement for external devices such as the polarization controller, further reducing the size of the QKD receiver. Compared with the full-on-chip decoders in Figure 1 and Figure 2, the basis selection unit and the time phase decoding unit are integrated according to the present disclosure, which has a high integration level and can effectively solve the problem of the degradation of performance caused by low optical coupling efficiency and polarization mode selection. In addition, compared with the structure shown in Figure 3, the basis selection unit and the time phase decoding unit are integrated according to the present disclosure without external phase modulator and optical circulator, thereby greatly reducing the size of the QKD receiver, with less insertion loss and performance improvement.

## Claims

1. A miniaturized time phase decoder, comprising a decoding chip implemented based on planar lightwave circuit technology, a first reflection unit (402) and a second reflection unit (401); wherein
the decoding chip comprises a first beam splitter (201) and a second beam splitter (202), wherein the decoding chip is provided with an input port, a time basis signal output port, a first phase basis signal output port, a second phase basis signal output port, a first reflection port and a second reflection port;
the first beam splitter (201) is provided with a first port, a second port, a third port and a fourth port, wherein a light input from the first port is output from the second port and the third port, and a light input from the third port is output from the first port and the fourth port;
the second beam splitter (202) is provided with a fifth port, a sixth port, a seventh port and an eighth port, wherein a light input from the fifth port is output from the sixth port and the seventh port, and a light input from the seventh port is output from the fifth port and the eighth port;
the input port is connected to the first port through a first waveguide (103);
the second port is connected to the time basis signal output port through a second waveguide (105);
the third port is connected to the fifth port through a third waveguide (104);
the sixth port is connected to the first reflection port through a fourth waveguide (106);
the seventh port is connected to the second reflection port through a fifth waveguide (300), wherein the fifth waveguide (300) has an optical path length different from an optical path length of the fourth waveguide (106);
the eighth port is connected to the first phase basis signal output port through a sixth waveguide (101);
the fourth port is connected to the second phase basis signal output port through a seventh waveguide (102);
the first reflection unit (402) is arranged at the first reflection port, and the first reflection unit (402) is configured to reflect a light signal and deflect a polarization state of the light signal by 90 degrees; and
the second reflection unit (401) is arranged at the second reflection port, and the second reflection unit (401) is configured to reflect a light signal and deflect a polarization state of the light signal by 90 degrees.

2. The time phase decoder according to claim 1, wherein the first beam splitter (201) is configured to implement, for a light input from the first port, a beam splitting ratio of A2:A3 between the second port and the third port, wherein A2 is not equal to A3; and the second beam splitter (202) is configured to implement equal splitting.

3. The time phase decoder according to claim 2, further comprising a third beam splitter (203), wherein the third beam splitter (203) comprises a ninth port, a tenth port, an eleventh port and a twelfth port, wherein a light input from the ninth port is output from the tenth port and the eleventh port, and a light input from the eleventh port is output from the ninth port and the twelfth port; for the light input from the ninth port, a beam splitting ratio between the tenth port and the eleventh port is A2:A3; and
the sixth waveguide (101) comprises a first waveguide section and a second waveguide section, the eleventh port is connected to the eighth port through the first waveguide section, and the twelfth port is connected to the first phase basis signal output port through the second waveguide section.

4. The time phase decoder according to any one of claims 1 to 3, wherein the reflection units (401, 402) are 45-degree Faraday rotator mirrors.

5. The time phase decoder according to claim 2 or claim 3, wherein A2:A3=70:30.

6. The time phase decoder according to any one of claims 1 to 3, wherein the waveguides (101, 102, 103, 104, 105, 106, 300) are fabricated from silicon dioxide materials, and the beam splitters are fabricated from silicon dioxide materials.

7. The time phase decoder according to any one of claims 1 to 3, wherein an optical path length difference between the fifth waveguide (300) and the fourth waveguide (106) is 1/2 of a time interval between two light pulses under the phase basis.

8. A QKD receiver used in a time phase encoding scheme, comprising a first photoelectric detection unit, a second photoelectric detection unit and the time phase decoder according to any one of claims 1 to 7; wherein
the first photoelectric detection unit is configured to detect a light signal output from the time basis signal output port; and
the second photoelectric detection unit is configured to detect light signals output from the first phase basis signal output port and the second phase basis signal output port.

9. The QKD receiver according to claim 8, wherein the first photoelectric detection unit comprises a third single-photon detector arranged at the time basis signal output port.

10. The QKD receiver according to claim 8, wherein the second photoelectric detection unit comprises a first single-photon detector and a second single-photon detector, the first single-photon detector is arranged at the first phase basis signal output port, and the second single-photon detector is arranged at the second phase basis signal output port.

## Patentansprüche

1. Miniaturisierter Zeit-Phasen-Decoder, umfassend einen auf der Basis der Planar-Lightwave-Circuit-Technologie implementierten Decodierchip, eine erste Reflexionseinheit (402) und eine zweite Reflexionseinheit (401); wobei
der Decodierchip einen ersten Strahlteiler (201) und einen zweiten Strahlteiler (202) umfasst, wobei der Decodierchip mit einem Eingangsanschluss, einem Zeitbasissignal-Ausgangsanschluss, einem ersten Phasenbasissignal-Ausgangsanschluss, einem zweiten Phasenbasissignal-Ausgangsanschluss, einem ersten Reflexionsanschluss und einem zweiten Reflexionsanschluss versehen ist;
der erste Strahlteiler (201) mit einem ersten Anschluss, einem zweiten Anschluss, einem dritten Anschluss und einem vierten Anschluss versehen ist, wobei ein in den ersten Anschluss eingeleitetes Licht aus dem zweiten Anschluss und dem dritten Anschluss ausgegeben wird und ein in den dritten Anschluss eingeleitetes Licht aus dem ersten Anschluss und dem vierten Anschluss ausgegeben wird;
der zweite Strahlteiler (202) ist mit einem fünften Anschluss, einem sechsten Anschluss, einem siebten Anschluss und einem achten Anschluss versehen, wobei ein in den fünften Anschluss eingeleitetes Licht aus dem sechsten Anschluss und dem siebten Anschluss ausgegeben wird und ein in den siebten Anschluss eingeleitetes Licht aus dem fünften Anschluss und dem achten Anschluss ausgegeben wird;
der Eingangsanschluss über einen ersten Wellenleiter (103) mit dem ersten Anschluss verbunden ist;
der zweite Anschluss über einen zweiten Wellenleiter (105) mit dem Zeitbasissignal-Ausgangsanschluss verbunden ist;
der dritte Anschluss über einen dritten Wellenleiter (104) mit dem fünften Anschluss verbunden ist;
der sechste Anschluss über einen vierten Wellenleiter (106) mit dem ersten Reflexionsanschluss verbunden ist;
der siebte Anschluss über einen fünften Wellenleiter (300) mit dem zweiten Reflexionsanschluss verbunden ist, wobei der fünfte Wellenleiter (300) eine optische Weglänge aufweist, welche sich von einer optischen Weglänge des vierten Wellenleiters (106) unterscheidet;
der achte Anschluss über einen sechsten Wellenleiter (101) mit dem ersten Phasenbasissignal-Ausgangsanschluss verbunden ist;
der vierte Anschluss über einen siebten Wellenleiter (102) mit dem zweiten Phasenbasissignal-Ausgangsanschluss verbunden ist;
die erste Reflexionseinheit (402) am ersten Reflexionsanschluss angeordnet ist, und die erste Reflexionseinheit (402) so konfiguriert ist, dass sie ein Lichtsignal reflektiert und den Polarisationszustand des Lichtsignals um 90 Grad ablenkt; und
die zweite Reflexionseinheit (401) ist am zweiten Reflexionsanschluss angeordnet, und die zweite Reflexionseinheit (401) so konfiguriert ist, dass sie ein Lichtsignal reflektiert und ein Polarisationszustand des Lichtsignals um 90 Grad ablenkt.

2. Zeit-Phasen-Decoder nach Anspruch 1, wobei der erste Strahlteiler (201) so konfiguriert ist, dass er für einen Lichteingang vom ersten Anschluss ein Strahlteilungsverhältnis von A2:A3 zwischen dem zweiten Anschluss und dem dritten Anschluss realisiert, wobei A2 ungleich A3 ist; und der zweite Strahlteiler (202) so konfiguriert ist, dass er eine gleichmässige Aufteilung realisiert.

3. Zeit-Phasen-Decoder nach Anspruch 2, ferner umfassend einen dritten Strahlteiler (203), wobei der dritte Strahlteiler (203) einen neunten Anschluss, einen zehnten Anschluss, einen elften Anschluss und einen zwölften Anschluss umfasst, wobei ein in den neunten Anschluss eingeleitetes Licht am zehnten Anschluss und am elften Anschluss ausgegeben wird und ein in den elften Anschluss eingeleitetes Licht am neunten Anschluss und am zwölften Anschluss ausgegeben wird; wobei für das in den neunten Anschluss eingeleitete Licht das Strahlteilungsverhältnis zwischen dem zehnten und dem elften Anschluss A2:A3 beträgt; und
der sechste Wellenleiter (101) einen ersten Wellenleiterabschnitt und einen zweiten Wellenleiterabschnitt umfasst, der elfte Anschluss über den ersten Wellenleiterabschnitt mit dem achten Anschluss verbunden ist und der zwölfte Anschluss über den zweiten Wellenleiterabschnitt mit dem Ausgangsanschluss für das erste Phasenbasissignal verbunden ist.

4. Zeit-Phasen-Decoder nach einem der Ansprüche 1 bis 3, wobei die Reflexionseinheiten (401, 402) 45-Grad-Faraday-Rotationsspiegel sind.

5. Zeit-Phasen-Decoder nach Anspruch 2 oder Anspruch 3, wobei A2:A3 = 70:30 ist.

6. Zeit-Phasen-Decoder nach einem der Ansprüche 1 bis 3, wobei die Wellenleiter (101, 102, 103, 104, 105, 106, 300) aus Siliziumdioxidmaterialien hergestellt sind und die Strahlteiler aus Siliziumdioxidmaterialien hergestellt sind.

7. Zeit-Phasen-Decoder nach einem der Ansprüche 1 bis 3, wobei eine optische Weglängendifferenz zwischen dem fünften Wellenleiter (300) und dem vierten Wellenleiter (106) die Hälfte eines Zeitintervalls zwischen zwei Lichtimpulsen unter der Phasenbasis beträgt.

8. Ein QKD-Empfänger, der in einem Zeit-Phasen-Codierungsschema verwendet wird, mit einer ersten photoelektrischen Detektionseinheit, einer zweiten photoelektrischen Detektionseinheit und dem Zeit-Phasen-Decoder gemäss einem der Ansprüche 1 bis 7; wobei
die erste photoelektrische Detektionseinheit so konfiguriert ist, dass sie ein vom Zeitbasis-Signalausgang ausgegebenes Lichtsignal detektiert; und
die zweite photoelektrische Detektionseinheit so konfiguriert ist, dass sie Lichtsignale erfasst, die vom ersten Phasenbasis-Signalausgang und vom zweiten Phasenbasis-Signalausgang ausgegeben werden.

9. QKD-Empfänger gemäss Anspruch 8, wobei die erste photoelektrische Detektionseinheit einen dritten Einzelphotonen-Detektor umfasst, der am Zeitbasissignal-Ausgangsanschluss angeordnet ist.

10. QKD-Empfänger nach Anspruch 8, wobei die zweite photoelektrische Detektionseinheit einen ersten Einzelphotonen-Detektor und einen zweiten Einzelphotonen-Detektor umfasst, der erste Einzelphotonen-Detektor am ersten Phasenbasissignal-Ausgangsanschluss angeordnet ist und der zweite Einzelphotonen-Detektor am zweiten Phasenbasissignal-Ausgangsanschluss angeordnet ist.

## Revendications

1. Décodeur de temps-phase miniaturisé, comprenant une puce de décodage mise en œuvre sur la base de la technologie des circuits à ondes lumineuses planaires, une première unité de réflexion (402) et une deuxième unité de réflexion (401) ; dans lequel
la puce de décodage comprend un premier séparateur de faisceau (201) et un deuxième séparateur de faisceau (202), la puce de décodage étant pourvue d'un port d'entrée, d'un port de sortie de signal de base temporelle, d'un premier port de sortie de signal de base de phase, d'un deuxième port de sortie de signal de base de phase, d'un premier port de réflexion et d'un deuxième port de réflexion ;
le premier séparateur de faisceau (201) est muni d'un premier port, d'un deuxième port, d'un troisième port et d'un quatrième port, une lumière entrant par le premier port étant émise par le deuxième port et le troisième port, et une lumière entrant par le troisième port étant émise par le premier port et le quatrième port ;
le deuxième séparateur de faisceau (202) est muni d'un cinquième port, d'un sixième port, d'un septième port et d'un huitième port, une lumière entrant par le cinquième port étant émise par le sixième port et le septième port, et une lumière entrant par le septième port étant émise par le cinquième port et le huitième port ;
le port d'entrée est connecté au premier port par l'intermédiaire d'un premier guide d'ondes (103) ;
le deuxième port est connecté au port de sortie du signal de base temporelle par l'intermédiaire d'un deuxième guide d'ondes (105) ;
le troisième port est connecté au cinquième port par l'intermédiaire d'un troisième guide d'ondes (104) ;
le sixième port est connecté au premier port de réflexion par l'intermédiaire d'un quatrième guide d'ondes (106) ;
le septième port est connecté au deuxième port de réflexion par l'intermédiaire d'un cinquième guide d'ondes (300), dans lequel le cinquième guide d'ondes (300) a une longueur de trajet optique différente d'une longueur de trajet optique du quatrième guide d'ondes (106) ;
le huitième port est connecté au premier port de sortie de signal de base de phase par l'intermédiaire d'un sixième guide d'ondes (101) ;
le quatrième port est connecté au deuxième port de sortie de signal de base de phase par l'intermédiaire d'un septième guide d'ondes (102) ;
la première unité de réflexion (402) est disposée au niveau du premier port de réflexion, et la première unité de réflexion (402) est configurée pour réfléchir un signal lumineux et dévier l'état de polarisation du signal lumineux de 90 degrés ; et
la deuxième unité de réflexion (401) est disposée au niveau du deuxième port de réflexion, et la deuxième unité de réflexion (401) est configurée pour réfléchir un signal lumineux et dévier l'état de polarisation dudit signal lumineux de 90 degrés.

2. Décodeur de temps-phase selon la revendication 1, dans lequel le premier séparateur de faisceau (201) est configuré pour mettre en œuvre, pour une lumière entrant par le premier port, un rapport de séparation de faisceau de A2:A3 entre le deuxième port et le troisième port, où A2 n'est pas égal à A3 ; et le deuxième séparateur de faisceau (202) est configuré pour mettre en œuvre une séparation égale.

3. Décodeur de temps-phase selon la revendication 2, comprenant en outre un troisième séparateur de faisceau (203), dans lequel
le troisième séparateur de faisceau (203) comprend un neuvième port, un dixième port, un onzième port et un douzième port, une lumière entrant par le neuvième port étant émise par le dixième port et le onzième port, et une lumière entrant par le onzième port étant émise par le neuvième port et le douzième port ; pour la lumière entrant par le neuvième port, le rapport de division du faisceau entre le dixième port et le onzième port est de A2:A3 ; et
le sixième guide d'ondes (101) comprend une première section de guide d'ondes et une deuxième section de guide d'ondes, le onzième port est connecté au huitième port par l'intermédiaire de la première section de guide d'ondes, et le douzième port est connecté au premier port de sortie du signal de base de phase par l'intermédiaire de la deuxième section de guide d'ondes.

4. Décodeur de temps-phase selon l'une quelconque des revendications 1 à 3, dans lequel les unités de réflexion (401, 402) sont des miroirs rotateurs de Faraday à 45 degrés.

5. Décodeur de temps-phase selon la revendication 2 ou la revendication 3, dans lequel A2:A3 = 70:30.

6. Décodeur de temps-phase selon l'une quelconque des revendications 1 à 3, dans lequel les guides d'ondes (101, 102, 103, 104, 105, 106, 300) sont fabriqués à partir de matériaux en dioxyde de silicium, et les séparateurs de faisceau sont fabriqués à partir de matériaux en dioxyde de silicium.

7. Décodeur de temps-phase selon l'une quelconque des revendications 1 à 3, dans lequel la différence de longueur de trajet optique entre le cinquième guide d'ondes (300) et le quatrième guide d'ondes (106) est égale à la moitié d'un intervalle de temps entre deux impulsions lumineuses sous la base de phase.

8. Récepteur QKD utilisé dans un schéma de codage temps-phase, comprenant une première unité de détection photoélectrique, une deuxième unité de détection photoélectrique et le décodeur temps-phase selon l'une quelconque des revendications 1 à 7 ; dans lequel
la première unité de détection photoélectrique est configurée pour détecter un signal lumineux émis par le port de sortie du signal de base temporelle ; et
la deuxième unité de détection photoélectrique est configurée pour détecter des signaux lumineux émis par le premier port de sortie de signal de base de phase et le deuxième port de sortie de signal de base de phase.

9. Récepteur QKD selon la revendication 8, dans lequel la première unité de détection photoélectrique comprend un troisième détecteur de photons uniques disposé au niveau du port de sortie du signal de base temporel.

10. Récepteur QKD selon la revendication 8, dans lequel la deuxième unité de détection photoélectrique comprend un premier détecteur de photons uniques et un deuxième détecteur de photons uniques, le premier détecteur de photons uniques étant disposé au niveau du premier port de sortie de signal de base de phase, et le deuxième détecteur de photons uniques étant disposé au niveau du deuxième port de sortie de signal de base de phase.
